# FASCICULE DE BREVET EUROPEEN

(11) **EP 3 635 177 B1**
(45) Date de publication et mention de la délivrance du brevet: **11.05.2022**
(21) Numéro de dépôt: 18739895.3
(22) Date de dépôt: 07.06.2018
(51) Int. Cl.: E01C 11/26

(54) **PROCÉDÉ DE FABRICATION D'UN REVÊTEMENT DE VOIRIES COMPRENANT UN DISPOSITIF POUR ÉCHANGEUR DE CHALEUR**
VERFAHREN ZUR HERSTELLUNG EINER STRASSENOBERFLÄCHE MIT EINER WÄRMETAUSCHERVORRICHTUNG
METHOD FOR PRODUCING A ROAD SURFACE COMPRISING A HEAT EXCHANGER DEVICE

(30) Priorité: 07.06.2017 FR 1755039
(43) Date de publication de la demande: 15.04.2020
(73) Titulaire: Eurovia, 92500 Rueil-Malmaison (FR)
(72) Inventeur: POUTEAU, Bertrand, 33160 Saint Medard En Jalles (FR); BERRADA, Kamal, 33290 Le Pian Medoc (FR); VERGNE, Sandrine, 33400 Talence (FR)
(74) Mandataire: Regimbeau
(86) Numéro de dépôt international: PCT/FR2018/051317
(87) Numéro de publication internationale: WO 2018/224781

(56) Documents cités:
- WO-A1-99/34155
- US-A1- 2010 154 216

## Description

L'invention concerne un procédé de fabrication d'un revêtement de voiries comprenant, avantageusement en surface, un dispositif pour échangeur de chaleur visant à récupérer de l'énergie thermique des chaussées de voirie ou à restituer de l'énergie thermique à la chaussée. Ce procédé peut être mis en œuvre lors de la fabrication d'une nouvelle voirie ou lors de la rénovation d'une voirie existante.

Il existe à peu près 32 millions de kilomètres de routes revêtues dans le monde. Les chaussées sont des surfaces plus ou moins planes, généralement de couleur foncée, ce qui les rend intéressantes pour cette invention : leurs propriétés thermiques font qu'elles sont capables d'emmagasiner des quantités notables d'énergie thermique pendant la journée, grâce à l'ensoleillement reçu. Dans un contexte mondial de développement des énergies renouvelables, il semble tout à fait judicieux d'essayer de récupérer cette énergie gratuite captée par les chaussées.

Parmi les différents matériaux utilisés pour la construction des chaussées, en particulier l'asphalte coulé, les enrobés bitumineux, le béton, le macadam ou le sable, les enrobés bitumineux sont un des matériaux qui monte le plus en température au cours de la journée à cause de sa réflectance moindre et de sa conductivité thermique modérée.

On connait déjà l'utilisation des chaussées comme collecteurs thermiques pour de multiples emplois : refroidissement des chaussées pour éviter la déformation permanente susceptible d'apparaître en été, récupération de la chaleur emmagasinée pour apporter de l'énergie à des bâtiments adjacents.

On connaît également l'emploi de la géothermie pour réchauffer la chaussée, en particulier pour déneiger les routes en hiver (chaussées chauffantes).

Le brevet DE 20 2004 006 198 U décrit un système pour la récupération de l'énergie thermique des chaussées dans lequel des tuyaux sont installés sous la route. Ce système nécessite une couche de protection des tuyaux qui impacte la performance énergétique. En effet, les tuyaux sont éloignés de la couche de roulement, qui constitue le collecteur thermique.

La demande de brevet WO99/34155 décrit un système pour la récupération de l'énergie thermique des chaussées dans lequel des tuyaux sont intégrés dans des enrobés bitumineux poreux chaud (110-160°C). Cette demande enseigne que les enrobés bitumineux doivent être poreux, voire très poreux, pour permettre l'intégration des tuyaux. Une couche adhésive est prévue pour combler les espaces vides entre les tuyaux et l'enrobé bitumineux poreux. Les tuyaux doivent être refroidis, par mise en circulation d'un agent refroidissant sous pression, pendant l'intégration et les phases de passage des machines de chantier. Le refroidissement des tuyaux et leur mise sous pression permet de les protéger thermiquement, mécaniquement et surtout d'éviter un retrait thermique lors de la pose des tuyaux dans un enrobé encore chaud. En outre, il convient également de contrôler l'angle des tuyaux avec l'axe des rouleaux du compacteur.

Le document US2010154216A1 est un autre exemple de méthode de fabrication d'un revêtement de voiries.

Selon ce procédé, des moyens particuliers, coûteux, doivent être mis en œuvre lors du passage subséquent des chenilles des finisseurs ou autres machines de chantier.

L'invention vise un procédé simple permettant d'intégrer au moins un tuyau pour dispositif de chaleur dans une chaussée existante, soit en cours de fabrication, soit en cours de rénovation.

L'invention vise à industrialiser la mise en œuvre de l'échangeur dans les chaussées afin :
- de permettre une mise en œuvre à haute cadence ;
- d'assurer l'intégrité des tuyaux et de la chaussée sous tout trafic ;
- d'être circulable rapidement après la mise en œuvre
- de viser une recyclabilité à 100%.

Avantageusement, la présence du dispositif pour échangeur de chaleur n'impacte pas les performances routières de la voirie.

L'invention propose l'intégration du tuyau dans un enrobé existant en créant dans l'enrobé du revêtement des réservations pour le tuyau puis l'espace est comblé par un enrobé hydrocarboné particulier et une couche de surface est appliquée.

### DESCRIPTION DES FIGURES

Figure 1 : une vue par-dessus de la couche creusée de l'étape b) avec des rainures recevant les tronçons du tuyau et des bandes recevant les boucles du tuyau. On a représenté dans l'une de ces rainures le comblement avec une composition.

Sur la figure 2, on a représenté la couche creusée comprenant les tuyaux sur laquelle une couche de roulement est déposée.

Sur la figure 3, on a dessiné différentes formes que peut prendre la rainure (vue en coupe) :
Figure 3A : forme d'un U,
Figure 3B : forme d'un V,
Figure 3C : forme d'une queue d'aronde,
Figure 3D : forme carrée

Sur ces figures, on n'a pas représenté le tuyau qui sera positionné dans la rainure. « w » désigne la largeur de chaque rainure.

Sur la figure 4, on montre l'analyse de percolation par analyse d'image :
Figure 4A : Sélection de la zone à analyser : 3 d
Figure 4B Détection visuelle des zones non percolées

### DESCRIPTION DETAILLEE DE L'INVENTION

L'invention a pour objet un procédé de fabrication d'un revêtement de voiries 2 ayant les caractéristiques de la revendication 1.

Par « température de mise en œuvre », on entend, au sens de la présente invention, la température à laquelle l'enrobé hydrocarboné est appliqué sur chantier.

Des caractéristiques avantageuses de l'invention vont être décrites par la suite. Ces caractéristiques peuvent être combinées entre elles.

### Dispositif pour échangeur de chaleur :

Le dispositif pour échangeur de chaleur comprend au moins un tuyau 3, en particulier des tuyaux 3, dans lesquels au moins un fluide caloporteur va pouvoir circuler.

Les tuyaux 3 sont avantageusement en polymère. En effet, on souhaite que la présence du dispositif dans le revêtement de voirie n'en impacte pas sa recyclabilité. Le polymère est choisi en fonction de la température d'application de l'enrobé 4 et de la chaleur massique apportée par cet enrobé 4. On choisit un polymère ayant une température de fusion ou de ramollissement ou de transition vitreuse supérieure à la température d'application de l'enrobé 4.

A titre d'exemple de polymère adapté, on peut citer le polyéthylène haute densité, le polyéthylène haute densité réticulé, le polypropylène, le polybutène, les copolymères bloc éthylène-propylène.

Une caractéristique importante de ces tuyaux 3 est leur résistance à l'écrasement.

En effet, les tuyaux 3 vont être soumis au poids de l'enrobé 4 de comblement et du passage du compacteur.

La résistance à l'écrasement est la force obtenue lorsque le tuyau 3 est écrasé de telle manière que son diamètre extérieur est divisé par deux par rapport à son diamètre initial.

Les tuyaux 3 ont une résistance à l'écrasement supérieure à 2 000 N par mètre linéaire de tuyau à 100°C, avantageusement supérieure à 3 000 N, plus avantageusement supérieure à 4 000 N.

En particulier, les tuyaux 3 ont une résistance à l'écrasement comprise entre 2000 N et 100 000 N, avantageusement entre 3 000 N et 100 000 N, plus avantageusement entre 4 000 N et 100 000 N, par mètre linéaire de tuyau à 100°C.

Pour un même polymère, la rigidité des tuyaux 3, et ainsi la résistance à l'écrasement, pourra être augmentée en augmentant l'épaisseur de peau des tuyaux 3.

Une autre caractéristique avantageuse de ces tuyaux 3 est leur dilatation thermique.

La dilatation thermique des tuyaux 3 est avantageusement inférieure à 200.10⁻⁶ K⁻¹ à 20°C, plus avantageusement inférieure à 160.10⁻⁶ K⁻¹ à 20°C. La dilatation thermique des tuyaux 3 est généralement supérieure à10.10⁻⁶ K⁻¹ à 20°C.

Les tuyaux 3 sont soumis à la chaleur lors de l'application de l'enrobé 4 de comblement, lorsque celui-ci n'est pas un matériau bitumineux coulé à froid (MBCF). La chaleur apportée dépend de la température de mise en œuvre de l'enrobé 4 et également de l'épaisseur de l'enrobé 4 (chaleur massique) et ainsi du temps d'exposition à une température supérieure à la température ambiante.

Avantageusement, le retrait à chaud des tuyaux 3, mesuré selon la norme NF EN ISO 2505, de 2005, est inférieur à 3% (en étuve, à 150°C pendant 60 mn), plus avantageusement inférieur à 2%.

Les tuyaux 3 du dispositif ont avantageusement un diamètre allant de 5 mm à 30 mm. Les tuyaux 3 du dispositif ont avantageusement une épaisseur de peau allant de 1 mm à 5 mm.

En fonctionnement, un fluide caloporteur circule dans les tuyaux 3 du dispositif pour échangeur thermique. Le fluide caloporteur peut être de l'eau ou de l'eau glycolée pour diminuer le point de congélation et la résistance au froid. On préfère une eau glycolée non nocive de nature mono-propylène glycol, comme préconisé par la norme NF X10-970 de janvier 2011.

Des additifs, notamment des additifs fongicides et bactéricides, pourront être ajoutés au fluide caloporteur.

### Enrobé hydrocarboné 4

Un enrobé hydrocarboné est un granulat recouvert de liant hydrocarboné, utilisé dans le revêtement de chaussées. Il est obtenu par mélange d'une fraction granulaire et d'un liant hydrocarboné.

Il a été constaté que, contrairement à d'autres matériaux de comblement, l'enrobé hydrocarboné 4 permet d'assurer un bon contact entre les tuyaux 3 et la composition durcie tout en assurant que les tuyaux 3 ne remontent pas vers la surface. Cela pourra être vérifié en mettant en œuvre la méthode d'analyse de percolation par analyse d'image et la méthode d'essai « Flottaison » décrites en introduction des exemples.

### Fraction granulaire :

Par "fractions granulaires", on entend ici toutes fractions minérales solides utilisables pour la réalisation de produits routiers, à base de liant hydrocarboné comprenant notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIDN), ainsi que leurs mélanges en toutes proportions.

Dans le cadre de l'invention, la fraction granulaire comprend avantageusement :
- des éléments inférieurs à 0,063 mm (filler ou fines)
- du sable dont les éléments sont compris entre 0,063 mm et 2 mm ;
- des éléments, en particulier des gravillons, ayant des dimensions
   ∘ comprises entre 2 mm et 6 mm ;
   ∘ éventuellement, comprises entre 6 mm et 10 mm;

La taille des granulats minéraux est mesurée par les essais décrits dans la norme NF EN 933-2 (version mai 1996).

Par « fines minérales » ou « filler », on entend toute charge minérale ou siliceuse, passant à travers un tamis à maille carrée de 0,063 mm de côté. Les fines peuvent être des fines naturelles ou d'apport, par exemple des fines calcaires (carbonate de calcium), du ciment ou de la chaux hydratée, ou de récupération.

On entend par « agrégats d'enrobés » des enrobés (mélange de granulats et de liants hydrocarboné, avantageusement bitumineux) provenant de fraisage de couches d'enrobé, de concassage de plaques extraites de chaussées en enrobés, de morceaux de plaques d'enrobés, de déchets d'enrobés ou de surplus de productions d'enrobés (les surplus de productions sont des matériaux enrobés ou partiellement enrobés en centrale résultant des phases transitoires de fabrication).

Dans la fraction granulaire, la teneur en fines (éléments inférieurs à 0,063 mm), varie avantageusement de 5% à 10% en poids, par rapport à la masse totale de la fraction granulaire, plus avantageusement de 6% à 9% en poids.

Dans la fraction granulaire, la teneur en éléments ayant une taille supérieure à 0,063 mm et inférieure ou égale à 2 mm, en particulier du sable, varie avantageusement de 15 % à 60 % en poids, par rapport à la masse totale de la fraction granulaire, plus avantageusement de 20% à 50% en poids, plus avantageusement de 24% à 38% en poids.

Dans la fraction granulaire, la teneur en éléments ayant une taille supérieure à 2 mm varie de 30% à 80% en poids, par rapport à la masse totale de la fraction granulaire, plus avantageusement de 35% à 70% en poids, plus avantageusement de 40% à 65% en poids. En particulier, la fraction granulaire de l'enrobé 4 comprend avantageusement :
- 6% à 9% en poids, par rapport au poids total de la fraction granulaire, de fines, ayant une taille inférieure à 0,063 mm ;
- 24% à 38% en poids, par rapport au poids total de la fraction granulaire, de sable, ayant une taille comprise entre 0,063 mm et 2 mm ;
- 40% à 65% en poids, par rapport au poids total de la fraction granulaire, de granulats, ayant une taille comprise entre 2 mm et 10 mm.

La conductivité thermique de l'enrobé 4 est notamment réglée par le type de granulats. La conductivité thermique, λ, de la composition 4 est avantageusement supérieure ou égale à 1 W/m.K, plus avantageusement supérieure ou égale à 1,2 W/m.K, encore plus avantageusement supérieure ou égale à 1,5 W/m.K.

### Liant hydrocarboné :

Le liant est ce qui permet de coller les granulats entre eux et d'assurer une bonne tenue mécanique de la chaussée.

Le liant de l'enrobé 4 un liant hydrocarboné qui peut être bitumineux ou végétal ou de synthèse. Le liant peut également être un mélange de liants issus de ces différentes origines.
On entend par « liant hydrocarboné», un liant hydrocarboné, avantageusement d'origine fossile, ou tout liant d'origine végétale ou synthétique, utilisable pour la réalisation d'un produit routier, en particulier un produit hydrocarboné. Avantageusement, il s'agit de toute composition contenant du bitume, éventuellement un additif de maniabilité et éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'en ajuster les propriétés, comme par exemple l'adhésivité. À titre d'exemple, on citera les bitumes, les bitumes modifiés par des élastomères et/ou des plastomères.

Ce liant hydrocarboné peut se trouver sous forme liquide ou sous la forme d'une émulsion ou d'une mousse.

Avantageusement, le liant est de grade 35/50.

Dans une variante avantageuse de l'invention, on utilisera les liants routiers répondant aux normes NF EN 12591 (2009, bitumes purs) ou NF EN 13924 (2006, bitumes durs) ou NF EN 14023 (2010, bitume modifié polymère).

Avantageusement, le liant comprend également un polymère.

Le « polymère » modifiant le liant auquel il est fait référence ici, peut être choisi parmi les polymères naturels ou synthétiques. Il s'agit par exemple d'un polymère de la famille des élastomères, synthétiques ou naturels, et de manière indicative et non limitative :
- les copolymères statistiques, multi-séquencés ou en étoile, de styrène et de butadiène ou d'isoprène en toutes proportions (en particulier copolymères blocs de styrène-butadiène-styrène (SBS), de styrène-butadiène (SB, SBR pour styrène-butadiène rubber), de styrène-isoprène-styrène (SIS)) ou les copolymères de même famille chimique (isoprène, caoutchouc naturel, ...), éventuellement réticulés in-situ, en particulier les copolymères statistiques, multi-séquencés ou en étoile, de styrène et de butadiène ou d'isoprène en toutes proportions
- les copolymères d'acétate de vinyle et d'éthylène en toutes proportions,
- les copolymères de l'éthylène et d'esters de l'acide acrylique, méthacrylique ou de l'anhydride maléique, les copolymères et terpolymères d'éthylène et de méthacrylate de glycidyle-) et les polyoléfines, en particulier le polyéthylène.

Le polymère est avantageusement choisi parmi les copolymères statistiques, multi-séquencés ou en étoile, de styrène et de butadiène ou d'isoprène, les copolymères d'acétate de vinyle et d'éthylène et le polyéthylène.

Le polymère modifiant le bitume peut être choisi parmi les polymères de récupération, par exemple des « poudrettes de caoutchouc » ou autres compositions à base de caoutchouc réduits en morceaux ou en poudre, par exemple obtenues à partir de pneus usagés ou d'autres déchets à base de polymères (câbles, emballage, agricoles, ...) ou encore tout autre polymère couramment utilisé pour la modification des bitumes tels que ceux cités dans le Guide Technique écrit par l'Association Internationale de la Route (AIPCR) et édité par le Laboratoire Central des Ponts et Chaussées "Use of Modified Bituminous Binders, Special Bitumens and Bitumens with Additives in Road Pavements" (Paris, LCPC, 1999), ainsi que tout mélange en toute proportion de ces polymères.

Dans le cas de polymère de récupération, en particulier de déchet, pratiquement il pourra être ajouté lors de l'enrobage, par exemple avec la fraction minérale solide.

Lorsqu'un polymère est présent, la teneur en polymère dans le liant varie avantageusement de 2% à 20% en poids, plus avantageusement de 2% à 10% en poids, encore plus avantageusement de 4% à 8% en poids, par rapport au poids total du liant.

Dans l'enrobé 4 selon l'invention, la teneur en liant varie avantageusement de 3,1% à 10% en poids, par à la masse totale de l'enrobé, plus avantageusement de 4,5% à 10% en poids, plus avantageusement de 4,5% à 8,5%

Dans un premier mode de réalisation l'enrobé 4 est un matériau bitumineux coulé à froid (MBCF).

Selon la norme NF EN 12273 (octobre 2008), un matériau bitumineux coulé à froid est revêtement superficiel constitué d'un mélange de granulats, d'eau, d'émulsion de bitume et d'additifs préparé et appliqué sur place (à l'avancement).

Dans le cas de la fabrication de matériaux bitumineux coulés à froid (MBCF) 4, le liant hydrocarboné se trouvera avantageusement sous la forme d'une émulsion cationique.

L'émulsion cationique de bitume est avantageusement obtenue en mélangeant, en poids par rapport au poids total de l'émulsion :
- 50% à 75% d'un liant hydrocarboné, avantageusement bitumineux,
- 25% à 50% d'une phase aqueuse contenant :
   i. 0,1% à 2%, en poids par rapport au poids total de l'émulsion, d'une composition émulsifiante
   ii. une quantité suffisante d'un acide pour ajuster le pH de la phase aqueuse à une valeur comprise entre 1,5 et 8,
   iii. et de l'eau pour complément de la formule à 100%.
Le pH de la phase aqueuse varie plus avantageusement entre 1,5 et 7, plus avantageusement entre 1,5 et 5,5, encore plus avantageusement entre 2 et 3,5.

Dans l'émulsion, la teneur en liant varie avantageusement de 50% à 75% en poids de liant, par rapport au poids total de l'émulsion, plus avantageusement de 60% à 70% en poids.

Par exemple pour un MBCF 4, le liant est avantageusement un liant ayant une pénétrabilité mesurée selon la norme EN1426 (juin 2007) comprise entre 50 et 220, plus avantageusement entre 70 et 100.

Le liant peut en outre comprendre un dope d'acide gras.

Le dope d'acide gras peut être tout acide gras et dérivés, en particulier des diacides gras, triacides gras, dimère d'acides gras ou trimère d'acides gras, adapté à une utilisation dans un matériau bitumineux.

Par exemple, l'acide gras est choisi dans le groupe constitué de l'acide oléique, de l'acide linoléique, et leurs mélanges. Ces acides gras proviennent avantageusement d'huile(s) végétale(s) ou d'huiles usagées de l'industrie.

La teneur en dope d'acide gras varie avantageusement de 0,3% à 2 % en poids, par rapport au poids du liant, plus avantageusement de 0,5% à 1% en poids.

L'émulsion de bitume est une dispersion du liant dans l'eau, phase continue du système. Elle comprend une composition émulsifiante.

La teneur en composition émulsifiante varie avantageusement de 0,1% à 2% en poids, par rapport au poids total de l'émulsion, plus avantageusement de 0,13% à 1,2% en poids. La teneur en composition émulsifiante varie avantageusement de 1 kg à 20 kg par tonne d'émulsion, plus avantageusement de 1,3 kg à 12 kg par tonne d'émulsion.

Parmi les tensioactifs pertinents pour cette application on peut citer les produits commerciaux suivants :
- Dinoram^{®}S (Ceca) ou Redicote^{®}E9 (Akzo Nobel) : N alkyl suif propylène diamine
- Emulsamine^{®}L 60 (Ceca) : Préparation à base d'amide gras de tallol, N-(3-dimethylamino)propyles (> 50 %) et Emulsamine^{®}LZ (> 25 %) avec un hydrocarbure aromatique (> 1 %) et du diéthanolamine (> 1 %)
- Polyram^{®}S (Ceca): N-alkyl suif propylène polyamine avec Dinoram^{®}S (< 10 %), amines alkyl de suif (Noram^{®}S - < 5 %), nitrile de suif (< 10 %)
- Stabiram^{®}MS 601 (Ceca) : solution de dichlorure de N-alkyl suif N-diméthyl amino propyl N-triméthyl ammonium (> 50 %) dans un mélange eau/hexylène glycol (glycol > 20 %) avec Dinoram^{®}S (< 1 %)
- Dinoram^{®}O (Ceca) : N-(C16 et C18 alkyl insaturés) triméthylène diamine (diamine oléique)
- Emulsamine^{®}640 (Ceca) : Préparation à base d'amides gras de tallol (> 50 %), de Dinoram^{®}O (> 25 %) et de (Z)-octadec-9-enylamine (> 1 %)
- Indulin^{®}R 66 (Meadwestvaco) : Amides gras de tallol : N - [(diméthylamino)-3-propyl]
- lndulin^{®}R 33 (Meadwestvaco) : Amides gras de tallol (N-[(diméthylamino)-3-propyl]) (75-90 %), N-tallow alkyltrimethylenediamine (20-25%)
- lndulin^{®}GE F2 (Meadwestvaco) : Éthoxylate de nonylphénol (25-35 %), lignine alcalin (réaction produite avec diméthylamine et formaldéhyde) (15-20%), N-(alkyl en C14-18 et insaturés en C16-18)-triméthylènediamine (5-10%)
- lndulin^{®}GE F2 (Meadwestvaco) : alccols ethoxylés en C12-C14 (2,5-25 %), lignine alcalin (réaction produite avec diméthylamine et formaldéhyde) (10-20%), N-(alkyl en C14-18 et insaturés en C16-18)-triméthylènediamine (1-3%)
- Duomeen^{®}TTM (Akzo Nobel): suiftriméthylpropylènediamine (90-100%), suifdiméthylamine (5-10%)
- Redicote^{®}404 (Akzo Nobel) : tallol, produits de réaction avec la tétraéthylènepentamine (100%)

On pourra utiliser un ou plusieurs de ces tensioactifs, seuls ou en mélanges.

La composition émulsifiante pourra également comprendre un agent émulsifiant non ionique. Cet agent pourra être choisi dans la famille des alcools gras éthoxylés, la partie hydrophobe de la molécule pouvant être de type nonylphénol-, octylphénol-, cétytique, oléique..., la partie hydrophile étant constituée de plusieurs groupes éthoxy.

La phase aqueuse de la composition émulsifiante comprend également une quantité suffisante d'un acide minéral ou organique (par exemple : acide citrique, acide acétique), avantageusement un acide minéral. L'acide permet d'ioniser les fonctions amines des émulsifiants pour permettre leur dissolution dans l'eau.

La teneur en acide est ajustée à la teneur en émulsifiant (en fonction de la nature des granulats, de la température d'application...) pour avoir un pH de la phase aqueuse compris entre 1,5 et 8, avantageusement entre 1,5 et 7, plus avantageusement entre 1,5 et 5,5, encore plus avantageusement entre 2 et 3,5.

L'acide est avantageusement l'acide chlorhydrique, l'acide phosphorique ou un acide polyphosphorique. L'acide polyphosphorique est un oligomère d'acide phosphorique comprenant des molécules selon l'une ou l'autre des formules structurelles PₙO₃ₙ₊₁⁽ⁿ⁺²⁾⁻ dans laquelle n est un nombre entier supérieur ou égal à 1, avantageusement 1, 2 ou 3, ou P₂O₅·x(O²⁻), dans laquelle x est compris entre 0 et 1.

### Autres :

L'émulsion pourra contenir du latex synthétique ou naturel. Par latex on entend une dispersion de polymères (SBS, SB) réticulés ou non en phase aqueuse. Ce latex est incorporé dans la phase aqueuse avant émulsification ou en ligne pendant la fabrication de l'émulsion soit encore après fabrication de l'émulsion.

On peut également ajouter des fluxants d'origine pétrolière ou issus des agro-ressources. Ces fluxants peuvent être ajoutés durant la fabrication de l'émulsion ou lors de la fabrication des enrobés à l'émulsion.

L'agent fluxant est avantageusement un fluxant d'origine pétrolière ou pétrochimique. Un fluxant pétrolier est un produit issu de la distillation du pétrole brut (fraction(s) légère(s)), ayant pu subir éventuellement une opération d'hydrotraitement. En particulier, l'agent fluxant est choisi dans le groupe constitué par les agents fluxants commercialisés par Total (Greenflux^{®} 2000^{®}, Greenflux SD) ou par Exxon (Varsol^{®}).

L'agent fluxant est avantageusement un fluxant d'origine naturelle non fossile (origine végétale ou animale). Un fluxant d'origine naturelle non fossile est constitué d'une huile naturelle non fossile, de ses dérivés tels que les esters d'acide gras et de leurs mélanges. Ces agents fluxants d'origine naturelle non fossile sont bien connus de l'homme du métier.

Préférentiellement, on utilisera les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, leurs dérivés, ainsi que leur mélanges. Un additif de siccativation, tel que l'octoate de manganèse, pourra être ajouté à ces huiles et dérivés afin de favoriser les réactions d'oxydation.

On peut ajouter à la fraction granulaire un additif minéral pour réguler la cinétique de remontée de pH lors du mélange et assurer le temps de maniabilité et assurer ensuite la qualité de rupture de l'émulsion et améliorer les propriétés d'adhésivité. Cet additif est en règle générale du ciment, de la chaux éteinte, du lait de chaux calcique et/ou dolomitique.

Les matériaux bitumineux coulés à froid 4 sont mis en œuvre à température ambiante, c'est-à-dire à une température allant de 15°C à 40°C.

Ils sont ainsi particulièrement adaptés pour des tuyaux 3 plus sensibles à la température.

Généralement, pour des MBCF 4, on utilise des granulométries de la fraction granulaire 0/D de 0/4, 0/6, 0/6 discontinu, 0/8, 0/8 discontinu ou 0/10 recomposées, avec éventuellement humidification pour limiter la ségrégation lors du transport. La fraction minérale solide comprend avantageusement de 6% à 10% en poids de fines, par rapport au poids total de la fraction minérale.

La fraction minérale solide est mélangée avec une émulsion de bitume pour conduire à un matériau routier bitumineux 4 obtenu par enrobage. La fraction minérale solide constitue avantageusement 90% à 97%, plus avantageusement 90% à 96%, du poids du matériau bitumineux.

Dans un tel procédé dit « à froid », les granulats ne sont pas séchés, et sont mélangés tels quels, c'est-à-dire avec leur humidité naturelle (plus un ajustement de la teneur en eau si nécessaire) et à température ambiante. En fonction des conditions climatiques, de l'état de sécheresse de la fraction minérale solide, l'opérateur peut ajouter à la fraction minérale solide de l'eau d'apport.

En règle générale la teneur en poids totale en eau de la fraction minérale solide, constituée de l'eau d'apport et de l'eau naturellement présente dans la fraction minérale solide, varie selon les applications de 5% à 15 %. Les pourcentages sont exprimés en poids par rapport au poids total de la fraction minérale solide.

L'opérateur peut ajouter également un dope (solution éventuellement diluée d'un émulsifiant), qui servira principalement de retardateur de prise. Ces émulsifiants peuvent être des amines grasses mais aussi des ammoniums quaternaires.

Dans un deuxième mode de réalisation, l'enrobé 4 est un enrobé hydrocarboné dit à chaud ou tiède.

Dans ce mode de réalisation, le liant est avantageusement sous forme liquide ou sous forme de mousse.

Les granulats sont chauffés dans des dispositifs appelés « sécheurs », permettant ainsi une bonne adhésion du bitume au granulat. Le liant, tel que le bitume, est également chauffé, à des températures afin d'en abaisser la viscosité et de permettre un bon enrobage des granulats. L'enrobé ainsi formé est ensuite appliqué chaud sur la chaussée puis compacté chaud également, la température initialement élevée garantissant sa maniabilité. Le matériau se rigidifie ensuite au fur et à mesure qu'il se refroidit.

Dans le cadre de la présente invention, la température de mise en œuvre de l'enrobé est avantageusement inférieure à 140°C, plus avantageusement inférieure à 130°C, plus avantageusement comprise entre 60°C et 120°C, encore plus avantageusement comprise entre 90°C et 120°C.

Pour abaisser la température de mise en œuvre de l'enrobé 4, on peut ajouter à la formule lors de la préparation de l'enrobé 4 un additif de maniabilité. On dit alors qu'un tel enrobé 4 comprend un additif de maniabilité.

Cet additif de maniabilité peut être un additif présentant une température de fusion supérieure à 60 °C et inférieure à 130°C. Un tel additif présente une température de fusion supérieure à 60 °C, avantageusement supérieure à 80°C. Un tel additif a une température de fusion inférieure à 130°C, avantageusement inférieure à 120°C. Un tel additif permet de conférer de la maniabilité à l'enrobé 4.

Cet additif permet de réduire la viscosité du liant pour abaisser la température de fabrication et de mise en œuvre de l'enrobé 4 tout en conservant les propriétés mécaniques requises, améliorer la maniabilité, améliorer la compacité.

En particulier, un tel additif est au moins un triglycéride d'acides gras, ledit acide gras étant choisi dans le groupe constitué par les acides gras saturés, comprenant de 12 à 30 atomes de carbone, avantageusement de 12 à 20 atomes de carbone, et pouvant être substitués par au moins une fonction hydroxyle ou par un radical alkyle en C1-C4. Un acide gras saturé ne comporte pas d'insaturations (double ou triple liaison carbone carbone). En particulier, l'acide gras est choisi dans le groupe constitué par les acides gras saturés comprenant de 12 à 30 atomes de carbone, éventuellement substitués par au moins une fonction hydroxyle ou par un radical alkyle en C1-C4, en particulier l'acide gras est choisi dans le groupe constitué par l'acide 12-hydroxy-octadécanoïque, l'acide hexadécanoïque, l'acide octadécanoïque, l'acide 9,10-dihydroxy- octadécanoïque, l'acide icosanoïque, l'acide nonadécanoïque, et leurs mélanges.

L'additif de maniabilité est avantageusement un triglycéride d'acides gras, l'acide gras étant avantageusement choisi dans le groupe défini précédemment. En particulier, l'additif comprend au moins un triglycéride dont une molécule d'acide gras est constituée de l'acide 12-hydroxy-octadécanoïque. Un tel additif est par exemple décrit dans la demande EP 2 062 941.

La teneur en additif sera avantageusement comprise entre 1% et 6% en poids par rapport à la masse totale en liant.

D'autres additifs de maniabilité sont également connus.

Comme autre additif, on peut également citer des cires d'origines animale, végétale ou d'hydrocarbures, en particulier des cires hydrocarbonées à chaîne longue (plus de 30 atomes de carbone). En particulier, on peut citer les cires hydrocarbonées à base de polyéthylène ou également de cire hydrocarbonée obtenue par la synthèse de Fischer Tropsch (telle que la cire Fischer Tropsch commercialisée sous le nom commercial Sasobit^{®} par la société Sasol), de poids moléculaire supérieur à 400 g/mol et inférieur à 6 000 g/mol. De telles cires sont par exemple décrites dans les brevets US 6588974, FR 2 855 523, EP 1 017 760, EP 690 102.

Comme autre additif, on peut également introduire un dérivé d'acide gras choisi dans le groupe constitué par les diesters d'acide gras, les éthers d'acide gras, les cires d'amides, les cires de diamide et leurs mélanges.

Le liant, selon cette variante, contient avantageusement 1% à 6% en poids de ladite cire par rapport à la masse totale du liant.

Comme additif de maniabilité, on peut également introduire une résine naturelle, éventuellement modifiée, d'origine végétale.

La majorité des résines naturelles ou naturelles modifiées d'origine végétale n'ont pas de point de fusion déterminé mais présentent une zone de ramollissement. La résine présente avantageusement un point de ramollissement inférieur à 130°C, encore plus avantageusement inférieur à 120°C et en outre avantageusement supérieur à 65°C.

Le liant contient avantageusement 1% à 6% en poids de ladite résine d'origine végétale par rapport à la masse totale du liant.

La résine d'origine végétale est avantageusement choisie dans le groupe constitué par les colophanes naturelles ou naturelles modifiées, les esters de colophane, les savons de colophane, les terpènes, le tall oil, le dammar, les résines accroïdes. La résine d'origine végétale est plus particulièrement une résine de colophane, par exemple le glycérol ester de colophane maléique. On peut par exemple citer les additifs décrits dans les brevets FR 2 945 818, FR 2 965 271.

On peut également citer les additifs décrits dans les brevets EP 2 062 943, FR 2 939 143, FR 2 901 279.

L'additif de maniabilité peut ne pas avoir de point de fusion / changement d'état dans la plage de température d'intérêt. Par exemple, on peut introduire un fluxant, également appelé huile de fluxage, à base de matières grasses animales et/ou végétales (huiles et graisses). L'huile de fluxage peut être une huile végétale, un résidu de distillation d'une huile végétale, l'un de ses dérivés tels que sa partie acide gras, un mélange d'acides gras, un produit de transestérification (par un alcanol en C1-C6) tel qu'un ester méthylique de l'huile végétale ou un dérivé de résine alkyde de l'huile végétale. L'huile végétale comprend des chaînes grasses insaturées. De telles huiles sont par exemple décrites dans les brevets FR 2 910 477, EP 900 822, FR 2 721 043, FR 2 891 838.

On pourra également utilisant des fluxants tels que ceux décrits dans les brevets WO 2006/070104, WO 2011/151387 et FR 16/57180 (demande non encore publiée).

On peut également envisager des additifs diminuant les tensions superficielles à l'interface liant/granulat (meilleure mouillabilité).

On peut par exemple utiliser les additifs décrits dans les demandes de brevet FR 2 883 882, EP 1 716 207, EP 1 915 420.

Des polymères superabsorbants, tels que ceux décrits dans la demande FR 2 950 893, pourraient également être utilisés.

Des enrobés 4 maniables peuvent également être obtenues sans ajout d'additif de maniabilité.

Ainsi, le liant peut être expansé en mousse par emploi d'eau. L'eau peut être l'eau résiduelle des granulats ou d'additifs qui se vaporise au contact de granulats et de liant chauds pour faire mousser le liant sans pression.

Un exemple d'additif est une zéolithe, naturelle et/ou synthétique, ou sa phase de synthèse initiale amorphe, telle que décrite par exemple dans la demande de brevet WO 2004/016565.

La zéolithe est capable de libérer sous l'action de la chaleur (c'est-à-dire à une température supérieure à 110 °C) des molécules d'eau qui se trouvent entre les couches ou les interstices de son réseau cristallin. La zéolithe utilisée est avantageusement une zéolithe synthétique du type A, P, X et/ou Y. De préférence, on utilisera un granulé de zéolithe de type A, notamment de la formule brute Na12(AlO2)12(SiO2)12, 27 H2O où Na2O est de 18 %, Al2O3 de 28 %, SiO2 de 33 % et H2O de 21 %.

L'enrobé hydrocarboné 4 dit à chaud ou tiède est avantageusement résistant à l'orniérage, plus avantageusement avec un pourcentage d'ornières après 30 000 cycles à 60°C inférieur à 7,5%, avantageusement inférieur à 5%.

Le cas échéant, pour optimiser la résistance à l'orniérage, on utilisera avantageusement un liant additivé de polymères, tel que décrit précédemment.

Lorsque l'enrobé 4 comprend un additif de maniabilité à changement d'état, cet additif va également permettre d'assurer une bonne résistance à l'orniérage.

On peut également ajouter de l'acide polyphosphorique, tel que par exemple décrit dans les brevets WO2007/143016, WO2011/153267, WO2006/119354, FR 2 852 018.

Dans l'un ou l'autre de ces modes de réalisation, l'enrobé 4 est adapté à un trafic routier, y compris à fort trafic.

L'enrobé 4 est avantageusement un enrobé hydrocarboné 4 selon ce deuxième mode de réalisation lorsque les chantiers sont conduits dans des conditions ambiantes défavorables aux MBCF 4, par exemple pour une température ambiante inférieure à 10°C.

L'enrobé hydrocarboné 4 peut également comprendre un ou plusieurs additif(s). Des additifs peuvent être ajoutés soit au liant, soit au granulat, soit à l'enrobé.

Les additifs peuvent également être utilisés à des fins esthétiques, notamment pour un changement de couleur des produits routiers finaux. Il peut s'agir ainsi de pigment naturel ou non, tel que l'oxyde fer.

### Description détaillée du procédé

L'invention a pour objet un procédé de fabrication d'un revêtement de voiries 2 comprenant au moins un tuyau 3 d'un dispositif pour échangeur de chaleur, comprenant les étapes suivantes :
a) Creuser une couche 6 du revêtement de voiries pour créer des rainures 1 allant dans une même direction sans se croiser, et des bandes 2 reliant les rainures 1 deux à deux, les rainures 1 ayant une largeur allant de 0,8 d à 2 d et une profondeur allant de 0,8 d à 3 d, d étant le diamètre des tuyaux 3 du dispositif pour échangeur de chaleur ; puis
b) Poser le tuyau 3 dans les rainures 1 et les bandes 2 créées à l'étape a) en formant des tronçons reliés par des coudes, les rainures 1 recevant les tronçons et les bandes 2 les coudes, le tuyau 3 ayant une résistance à l'écrasement supérieure à 3000 N par mètre linéaire de tuyau à 100°C ; puis
c) Combler le volume laissé libre par le tuyau 3 dans les rainures 1 avec un enrobé hydrocarboné 4 à base :
   - d'un liant hydrocarboné
   - d'au moins 90% en poids, par rapport au poids total de l'enrobé hydrocarboné, d'une fraction granulaire dont les éléments ont des dimensions comprises entre 0 mm et 10 mm, ladite fraction granulaire comprenant de 30% à 60% en poids, par rapport au poids total de la fraction granulaire, d'éléments ayant des dimensions comprises entre 0 mm et 2 mm,
      ledit enrobé hydrocarboné 4 ayant une température de mise en œuvre inférieure à 160°C,
d) appliquer une couche de surface pour revêtement de voirie, en particulier une couche de roulement 5.

En chantier, le plus souvent, plusieurs tuyaux seront déposés. Le procédé selon l'invention est donc avantageusement un procédé de fabrication d'un revêtement de voiries 2 comprenant des tuyaux 3 d'un dispositif pour échangeur de chaleur. L'étape b) pourra ainsi être répétée plusieurs fois.

Lors de l'étape a), des bandes 2 et plusieurs rainures 1 sont creusées dans une couche 6 du revêtement de voiries, ou encore, dit autrement, une couche 6 de la chaussée.

Lors de l'étape b), le tuyau est posé dans les creux de la couche 6 crées à l'étape a), c'est-à-dire dans les rainures 1 et les bandes 2 créées à l'étape a).

Lors de l'étape c),le volume laissé libre par le tuyau 3 dans les rainures 1, c'est-à-dire l'espace entre le tuyau 3 et le reste de la chaussée dans les rainures 1, ou encore autrement formulé le volume de la rainure 1 non rempli par le tuyau, est comblé avec l'enrobé hydrocarboné 4.

### Etape a)

L'invention trouve particulièrement à s'appliquer pour des tuyaux 3 à installer proche de la surface. Ainsi, la couche 6 creusée lors de l'étape a) est avantageusement une couche de surface, telle que par exemple une couche de liaison. La couche 6 creusée lors de l'étape a) peut également être la couche de roulement de la chaussée à rénover, avant rénovation.

L'invention trouve particulièrement à s'appliquer dans le domaine de la route, la route pouvant être destinée à un fort trafic. Ainsi, la couche 6 creusée lors de l'étape a) est avantageusement une couche de matériaux liés, telle que par exemple une couche d'enrobés bitumineux, une couche de béton bitumineux à l'émulsion, une couche de béton, avantageusement une couche d'enrobés bitumineux ou une couche de béton bitumineux à l'émulsion.

L'épaisseur de la couche 6 de revêtement destinée à être creusée lors de l'étape a) varie avantageusement de d à 10 cm, avec d représentant le diamètre des tuyaux 3. L'épaisseur de la couche 6 de revêtement destinée à être creusée lors de l'étape a) varie avantageusement de 3 cm à 6 cm.

Lors de l'étape a), l'écart entre deux rainures 1 est sensiblement constant. Par sensiblement constant, on entend que l'écart entre deux rainures 1 est identique à 5 cm près, avantageusement à 3 cm près. Les écarts entre deux rainures 1 sont généralement de 10 cm à 30 cm avantageusement de 20 cm à 30 cm.

Les rainures 1 peuvent être courbées avec un rayon de courbure avantageusement supérieur à 1 mètre, avantageusement supérieur à 3 mètres, jusqu'à être linéaire (rayon de courbure infini).

La profondeur des rainures 1 varie de 0,8 d à 3 d, avantageusement de 0,9 d à 2,5 d, plus avantageusement de 1 d à 2,5 d, avec d représentant le diamètre des tuyaux 3.

La largeur des rainures 1 varie de 0,8 d à 2,5 d, avantageusement de 0,9 d à 2,5 d, plus avantageusement de 1 d à 2,5 d, avec d représentant le diamètre des tuyaux 3.

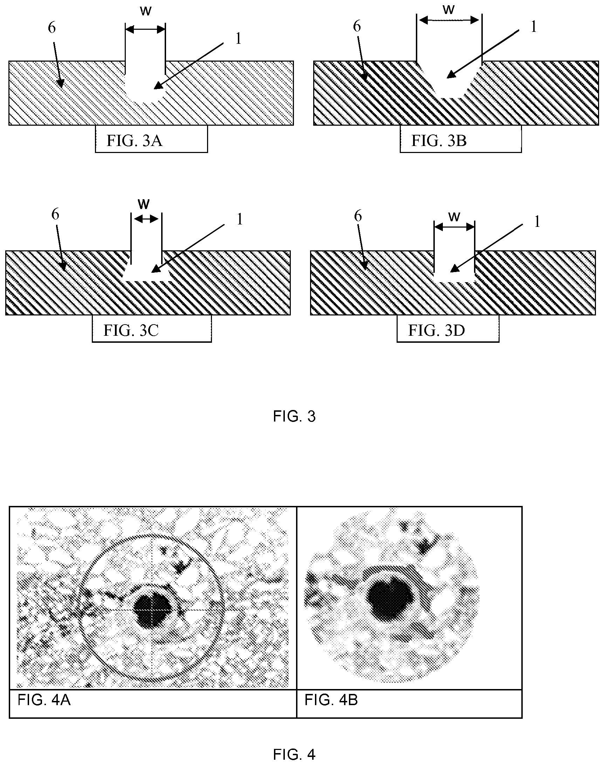

La « largeur » désigne la largeur de la rainure 1 mesurée à la surface supérieure de la couche 6 rainurée, désignée « w » sur la figure 3. Ainsi, la « largeur » désigne la largeur de l'ouverture pour la rainure 1.

Les rainures 1 peuvent avoir la forme d'un U, d'un V, d'une queue d'aronde, ou une forme carrée, telles que représentées sur la figure 3.

Par « queue d'aronde », on désigne, au sens de la présente invention, une forme trapézoïdale régulière ou non dans laquelle la grande base du trapèze correspond au fond de la rainure 1.

Les rainures 1 sont longitudinales ou transversales au sens de circulation sur la voirie.

Dans le procédé selon l'invention on creuse avantageusement plusieurs rainures 1a, 1b, 1c, 1d, 1e, 1f, et ainsi de suite, qui sont reliées deux à deux par les bandes 2. Ainsi, la rainure 1a est reliée à la rainure 1b, la rainure 1b est reliée à la rainure 1c, la rainure 1c est reliée à la rainure 1d, la rainure 1d est reliée à la rainure 1e, la rainure 1e est reliée à la rainure 1f, et ainsi de suite. Les rainures 1a, 1b, 1c, 1d, 1e, 1f et ainsi de suite peuvent être reliées par une même bande 2. Elles restent néanmoins reliées deux à deux. Avantageusement, les bandes 2 relient plus de deux rainures 1. Autrement dit, avantageusement les bandes 2 relient plusieurs rainures 1.

La dimension des bandes 2 est suffisante pour recevoir les coudes du tuyau 3. Les bandes 2 peuvent avoir la forme d'un parallélépipède ou de couronne lorsqu'on réalise une saignée à l'aide de carottiers. Avantageusement, les bandes 2 ont la forme d'un parallélépipède.

Lorsque les bandes 2 ont la forme d'un parallélépipède, la largeur des bandes 2 est avantageusement d'au moins 10 cm, plus avantageusement d'au moins 20 cm, encore plus avantageusement d'au moins 30 cm, par exemple de 35 cm. Ici, la largeur de la bande 2 est la dimension allant dans la même direction que les rainures 1.

Lorsque les bandes 2 ont la forme d'une couronne, le diamètre médian de la couronne correspond à l'écart entre deux rainures 1 et l'épaisseur varie avantageusement de 0,8 d à 2,5 d.

Dans l'une ou l'autre de ces formes, la profondeur des bandes 2 varie avantageusement de 0,8 d à 3 d, plus avantageusement de 0,9 d à 2,5 d, encore plus avantageusement de 1 d à 2,5 d, avec d représentant le diamètre des tuyaux 3.

Avantageusement, les bandes 2 sous forme d'un parallélépipède relient plus de deux rainures 1.

Avantageusement, les bandes 2 sont transversales aux rainures 1.

Les rainures 1 sont avantageusement réalisées par un outil d'usinage. Un engin de chantier adapté est de préférence une fraiseuse dont le tambour est conçu pour réaliser un tranchage de chaussée 6 correspondant au calepinage souhaité. Ce dispositif permet de faire des rainures 1 longitudinales ou transversales. L'épaisseur des rainures 1 ainsi que l'écartement entre les rainures 1 est défini par le calepinage et piloté par le tambour. Des profils de saignée en V, U, queue d'aronde et carrée, préférentiellement U, sont possibles suivant l'orientation des dents. Le retour des boucles, c'est-à-dire les coudes des tuyaux 3 à 180°, est assuré par le rabotage d'une bande 2 transversale, sous la forme d'un parallélépipède, de largeur d'au moins 20 cm, ou par carottage d'une bande 2 sous la forme d'une couronne.

Cet usinage peut être réalisé par robot. Le robot est équipé d'un système permettant de trancher la chaussée 6. L'exécution du rainurage se fait à partir d'une maquette numérique définissant le trajet du robot pour réaliser le calepinage souhaité. Le robot peut aussi être piloté manuellement sur site.

En rénovation d'une chaussée existante :
- - cette étape a) peut être précédée d'une étape de rabotage de la ou des couche(s) de surface pré-existante(s) ; ou
- - cette étape a) peut être réalisée sur la couche de roulement pré-existante, c'est-à-dire sans rabotage ; ou
- - au cours de cette étape a), on peut simultanément raboter la ou les couche(s) de surface pré-existante(s) et creuser les rainures 1.

### Etape b)

La pose des tuyaux 3 lors de l'étape b) peut se faire par tout moyen, manuel ou automatisé.

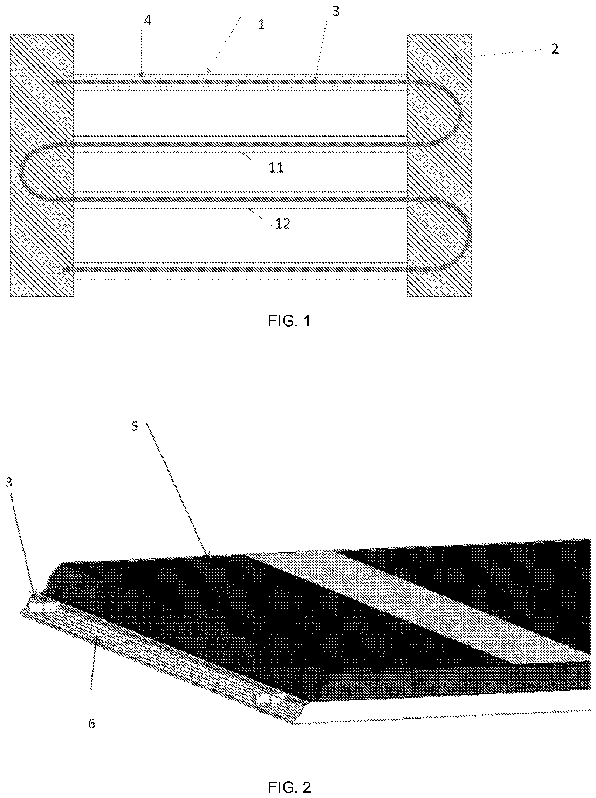

Comme on le voit sur la figure 1, les coudes du tuyau 3 correspondent aux zones du tuyau 3 qui dessinent un virage, voire un demi-tour, reliant deux tronçons successifs du tuyau 3. Les tronçons du tuyau 3 sont posés dans les rainures 1 et les coudes dans les bandes 2. Avantageusement un même tuyau 3 s'étend dans plusieurs rainures 1 en passant par au moins une bande 2. On place le tuyau 3 dans une première rainure 11, dessinant ainsi un tronçon puis le tuyau 3 quitte la rainure 11 et dessine un coude dans la bande 2 pour aller dans la deuxième rainure 12 et dessiner un nouveau tronçon, la bande 2 relie la première rainure 11 à la deuxième rainure 12. Avantageusement chaque tronçon est ininterrompu. Avantageusement chaque coude est ininterrompu.

La longueur du tuyau 3 est choisie au cas par cas, selon les chantiers. Elle est le plus souvent d'au moins 30 m, avantageusement au moins 50 m.

Les tuyaux 3 sont avantageusement conditionnés en plaque ou en rouleau, plus avantageusement en rouleau.

Lorsque les tuyaux 3 utilisés sont à mémoire de forme, on peut les traiter afin d'effacer la forme sur rouleau mémorisée par le tuyau 3. En particulier, lors de l'étape b), les tuyaux 3 peuvent être chauffés à des températures supérieures à 35°C, en particulier allant de 70°C à 96°C ou allant de 35°C à 55°C, en fonction de la nature du tuyau 3, afin de faciliter leur pose dans les rainures 1. Cela est particulièrement mis en œuvre lorsque le tuyau 3 est en polypropylène, à des températures supérieures à 70°C. Ce chauffage des tuyaux 3 peut être réalisé en faisant circuler un fluide chaud dans les tuyaux 3.

Les tuyaux 3 peuvent être préalablement mis en forme à la géométrie souhaitée. Ainsi, le procédé selon l'invention comprend une étape dans laquelle on impose une géométrie aux tuyaux 3 du dispositif pour échangeur de chaleur avant l'étape b) de dépôt.

Cette étape peut être réalisée précédemment en usine ou en atelier bord de voie.

Des attaches pourront être utilisées pour maintenir les tuyaux 3 en place dans les rainures 1, notamment lorsque la largeur des rainures 1 est supérieure à 1 d.

On utilise avantageusement des matériaux qui n'impactent pas le recyclage du revêtement de voirie.

Les étapes subséquentes pour la fabrication du revêtement de voirie peuvent être réalisées directement, sans nécessiter d'étape(s) supplémentaire(s) de protection des tuyaux 3.

Lors de l'étape b), ou à tout moment ultérieurement, en particulier après les étapes c) et d), les tuyaux 3 sont reliés à tout système thermique adapté, incluant une nappe de géothermie en profondeur, une sonde géothermique verticale, une pompe à chaleur, ...

### Couche d'accrochage

Dans un mode de réalisation, le procédé comprend suite à l'étape b), avant l'étape c), une étape d'application d'une couche d'accrochage.

Cette couche d'accrochage permet d'améliorer la liaison entre les couches de revêtement et ainsi d'unir les couches entre elles. La couche d'accrochage est appliquée en couche mince aux interfaces des différentes structures.

Pour réaliser cette couche d'accrochage on applique sur la couche 6 creusée comprenant les tuyaux 3, notamment par pulvérisation, un liant hydrocarboné éventuellement fluxé ou une émulsion de bitume, avantageusement une émulsion de bitume. Cette émulsion de bitume est avantageusement une émulsion telle que définie précédemment pour les MBCF.

La couche d'accrochage répond aux spécifications de la norme NF P 98-150-1, de juin 2010.

### Etapes c) et d)

Les étapes c) et d) peuvent être :
- successives : l'étape c) étant réalisée avant l'étape d), ou
- concomitantes : l'étape c) étant réalisée lors de l'application du revêtement de voirie de l'étape d). En effet, l'enrobé hydrocarboné 4 pourra être utilisé pour la confection de la couche de surface pour revêtement de voirie et combler, lors de son application, l'espace entre le tuyau 3 et le reste de la chaussée dans les rainures 1, et ainsi le volume laissé libre par le tuyau 3 dans les rainures 1. Dans un tel cas, l'étape c) n'est pas une étape individualisée mais elle est mise en œuvre concomitamment à l'application de la couche de surface pour revêtement de voirie lors de l'étape d).

L'épaisseur de la couche appliquée lors de l'étape c), ou lors de l'étape c) et d) lorsque ces deux étapes sont concomitantes, est avantageusement d'au moins 1 cm, en particulier de 1 cm à 10 cm, avantageusement de 1 cm à 6 cm.

Lorsque les étapes c) et d) sont successives :
- l'épaisseur de la couche appliquée lors de l'étape c), est avantageusement de >0 cm à 4 cm, plus avantageusement de >0 cm à 3 cm. Lorsque l'enrobé 4 est un MBCF, l'épaisseur de la couche appliquée lors de l'étape c), est avantageusement de >0 cm à 1 cm. Lorsque l'enrobé 4 est un enrobé hydrocarboné dit à chaud ou tiède, l'épaisseur de la couche appliquée lors de l'étape c), est avantageusement de 1 cm à 4 cm, plus avantageusement de 1 cm à 3 cm,
- la couche appliquée lors de l'étape d) est avantageusement une couche de roulement 5. Son épaisseur pourra dépendre du type de matériau et des propriétés recherchées. Néanmoins, pour optimiser les rendements énergétiques, son épaisseur est avantageusement inférieure ou égale à 8 cm, plus avantageusement inférieure ou égale à 6 cm, encore plus avantageusement inférieure ou égale à 4 cm. Par exemple son épaisseur peut aller de 2 cm à 4 cm.

Lorsque les étapes c) et d) sont concomitantes, l'épaisseur de la couche appliquée lors de l'étape c) et d), est avantageusement de 2 cm à 10 cm, plus avantageusement de 3 cm à 10 cm, plus avantageusement de 3 cm à 8 cm, encore plus avantageusement de 3 cm à 6 cm.

Dans l'une ou l'autre de ces variantes, après le dépôt de la couche de surface de l'étape d), on peut également envisager de déposer une couche supplémentaire.

Pour optimiser les rendements énergétiques, la couche comprenant les tuyaux 3 est proche de la surface. En particulier, l'épaisseur combinée de la ou des couche(s) appliquée(s) au-dessus de la couche de l'étape a) est avantageusement inférieure à 30 cm, plus avantageusement inférieure à 10 cm.

Pour toutes les épaisseurs, sauf indication contraire, il s'agit de l'épaisseur après compactage.

Lorsque l'enrobé hydrocarboné 4 est un MBCF, les étapes c) et d) sont avantageusement successives.

Dans un mode de réalisation, lorsque l'enrobé hydrocarboné 4 est un enrobé hydrocarboné dit tiède ou à chaud, les étapes c) et d) sont successives. Dans un autre mode de réalisation, lorsque l'enrobé hydrocarboné 4 est un enrobé hydrocarboné dit tiède ou à chaud, les étapes c) et d) sont concomitantes.

Le procédé peut comprendre une étape intermédiaire entre les étapes c) et d) comprenant le dépôt d'un matériau de renfort vis-à-vis de la fissuration.

Un tel matériau comprend par exemple un géo-matériau synthétique, tel qu'un géotextile ou une géogrille, constitué de polymère, éventuellement de bitume, éventuellement de fibres minérales ou organiques, tissé ou non tissé. Le matériau est de préférence perméable à l'eau et au bitume pour favoriser le collage. Les fibres peuvent en particulier être des fibres de verre.

Le matériau permet de renforcer la structure des couches, et notamment de limiter la remontée de fissures.

Le matériau permet avantageusement un recyclage simultané des enrobés hydrocarbonés des couches considérées, lorsque le revêtement de voirie est enlevé, par exemple suite à une opération de fraisage. En particulier, le matériau ne comprend pas d'élément métallique.

Lorsque les étapes c) et d) sont dissociées, le procédé pourra comprendre une étape intermédiaire de dépôt d'une couche d'accrochage sur la couche issue de l'étape c). Cette couche d'accrochage permet d'améliorer l'accrochage entre la couche issue de l'étape c) et la couche de roulement ou la couche de liaison de l'étape d). Elle répond avantageusement aux critères définis précédemment pour la couche d'accrochage optionnelle entre les étapes b) et c). Elle répond en particulier aux spécifications de la norme NF P 98-150-1, de juin 2010.

Pour éviter d'abîmer les tuyaux 3 lors des opérations de réparation ou renouvellement des couches de surface, on peut prévoir une couche colorée servant d'avertisseur visuel.

L'avertisseur visuel peut être interne à l'enrobé 4 ; il est alors avantageusement choisi parmi :
- un pigment de coloration, et/ou
- des granulats colorés, qui peuvent être avantageusement des gravillons colorés et/ou
- un liant de couleur différente du liant utilisé dans le revêtement de surface de l'étape d) ;
   de telle sorte que la couleur de l'avertisseur visuel interne tranche de la couleur du revêtement de surface.

Avantageusement, l'enrobé 4 est coloré dans la masse, c'est-à-dire que le pigment ou les granulats colorés sont présents dans toute l'épaisseur de la couche d'enrobé 4.

Avantageusement, l'épaisseur de la couche d'enrobé 4 colorée est d'au moins 1 cm, plus avantageusement d'au moins 2 cm.

Autrement, lorsque les étapes c) et d) sont dissociées, le procédé pourra comprendre une étape intermédiaire de dépôt au-dessus de la couche issue de l'étape c) ou de la couche d'accrochage, le cas échéant, d'une couche colorée servant d'avertisseur visuel. En effet, il est également envisageable de prévoir un avertisseur visuel externe par l'application au-dessus de la couche d'enrobé 4 d'une couche superficielle colorée (résine colorée, lait de chaux, enrobé hydrocarboné coloré, ...). Avantageusement, la distance entre le haut du tuyau 3 et la partie supérieure de la couche colorée est d'au moins 1 cm, avantageusement d'au moins 2 cm.

Lorsque la couche de surface de l'étape d) est une couche de matériau bitumineux coulé à froid, le procédé comprend avantageusement également l'application sur cette couche de surface d'une couche de roulement, par exemple une couche d'enrobé bitumineux ou de béton bitumineux à l'émulsion.

Le revêtement de voirie comprend, au-dessus de la couche comprenant les tuyaux 3, au moins une couche de revêtement de voirie :
i. adaptée aux trafics, des faibles trafics aux forts trafics en fonction des compositions des couches de la chaussée
ii. qui va capter l'énergie solaire (en mode récupération d'énergie) ou qui sera à réchauffer (en mode restitution d'énergie)

La voirie pourra être de large surface, ce qui fournira un échangeur thermique de grande dimension.

Sur la figure 2, on a représenté la couche 6 creusée comprenant les tuyaux 3 sur laquelle une couche de roulement 5 est déposée.

Les couches de surface du revêtement de voiries constituent un échangeur thermique fonctionnant en captation ou en restitution de chaleur, en fonction du climat, de large surface.

Préalablement à l'étape c), lors de l'étape c), ou après l'étape c) mais avant ou lors de l'étape d), l'espace entre le tuyau 3 et le reste de la chaussée dans les bandes 2, c'est-à-dire le volume laissé libre par le tuyau 3 dans les bandes 2, ou encore autrement formulé le volume de la bande 2 non rempli par le tuyau, est également comblé. Tout comme pour l'étape c), le comblement peut être réalisé directement lors de l'application de la couche de surface pour revêtement de voirie lors de l'étape d), le matériau utilisé pour cette couche de surface venant combler l'espace entre le tuyau 3 et le reste de la chaussée dans les bandes 2.

Le matériau de comblement doit lui aussi permettre d'assurer un bon contact entre les tuyaux 3 et la composition durcie tout en assurant que les tuyaux 3 ne remontent pas vers la surface. Cela pourra être vérifié en mettant en œuvre la méthode d'analyse de percolation par analyse d'image et la méthode d'essai « Flottaison » décrites en introduction des exemples.

L'enrobé hydrocarboné 4, décrit précédemment, convient également et dans un mode de réalisation, le matériau de comblement venant combler l'espace entre le tuyau 3 et le reste de la chaussée dans les bandes 2, c'est-à-dire le volume laissé libre par le tuyau 3 dans les bandes 2, est l'enrobé hydrocarboné 4 décrit précédemment, y compris le MBCF 4 du premier mode de réalisation ou l'enrobé 4 dit chaud ou tiède de l'autre mode de réalisation. Ainsi, avantageusement, l'espace entre le tuyau 3 et le reste de la chaussée dans les bandes 2, c'est-à-dire le volume laissé libre par le tuyau 3 dans les bandes 2, est comblé avec le même enrobé hydrocarboné 4 de l'étape c).

Dans des zones correspondant à des points singuliers, tels que les bandes 2 dans des zones difficiles d'accès pour les machines ou les bandes 2 dans des zones de liaison avec les zones d'intervention technique, d'autres produits de comblement pourront également être envisagés, tels que notamment :
- des produits hydrauliques tels qu'un coulis de ciment, un mortier hydraulique ;
- Un enrobé bitumineux ouvert percolé avec un coulis de ciment, en particulier le SALVIACIM^{®} décrit dans les brevets FR 1 191 666, FR 1 269 116 ;
- De l'asphalte coulé.

En outre, dans les zones profondes, on pourra les combler avec un de ces autres produits de comblement, en particulier le SALVIACIM^{®} et avec l'enrobé hydrocarboné 4 précédemment décrit. Le produit de comblement le plus proche de la surface sera avantageusement l'enrobé hydrocarboné 4.

Dans un mode de réalisation, l'espace, soit le volume laissé libre, est comblé en partie ou totalement avec un enrobé bitumineux ouvert percolé avec un coulis de ciment, en particulier le SALVIACIM^{®}.

Par « enrobés ouverts », on entend ici des enrobés qui restent perméables après leur refroidissement de par la présence d'espaces (porosité) qui continuent à assurer un passage entre les fractions solides minérales enrobées par le liant bitumineux. Cette porosité des enrobés ouverts est définie par une teneur en vides, après mise en œuvre et refroidissement, comprise entre 15% et 50% de vides.

Ces vides peuvent être comblés avec un coulis de ciment. Le coulis de ciment est un avantageusement un coulis de ciment prêt à l'emploi, fluide. Il comprend avantageusement un ciment, du sable et une charge siliceuse.

Dans une variante avantageuse de l'invention, les étapes c) et d) sont concomitantes et lors de l'étape d), l'enrobé hydrocarboné 4 vient combler l'espace entre le tuyau 3 et le reste de la chaussée dans les rainures 1 et l'espace entre le tuyau 3 et le reste de la chaussée dans les bandes 2, et ainsi vient combler le volume laissé libre par le tuyau 3 dans les rainure 1 et dans les bandes 2. Après le dépôt de cette couche de surface, on peut également envisager de déposer une couche supplémentaire.

Avantageusement, dans l'un quelconque des modes de réalisations décrits précédemment, la température de mise en œuvre du matériau de comblement des bandes 2 est inférieure à 165°C, avantageusement inférieure à 140°C, plus avantageusement inférieure à 130°C.

Le procédé de l'invention peut être mis en œuvre lors de la fabrication d'une nouvelle voirie ou lors de la rénovation d'une voirie existante.

En rénovation, le procédé comprend le cas échéant une étape au cours de laquelle on rabote les couches supérieures de la chaussée à renouveler jusqu'à atteindre une couche de revêtement 6, avantageusement une couche de liaison 6, destinée à être creusée lors de l'étape a).

Comme expliqué précédemment, cette étape optionnelle peut précéder l'étape a).

Alternativement, les machines utilisées à l'étape a) pour créer les rainures 1 peuvent également, au cours du même passage, raboter les couches qui doivent l'être.

Pour certaines applications, telles que le déneigement de chaussées, on cherche à orienter au maximum l'énergie transportée par le fluide caloporteur, circulant dans les tuyaux 3, vers la surface. La couche isolante permet de minimiser toute déperdition de chaleur ailleurs que vers la surface.

En complément, le revêtement de voiries selon l'invention peut comprendre, en-dessous de la couche 6 comprenant les tuyaux 3, une couche de matériaux isolants.

Ces matériaux isolants peuvent par exemple être une couche d'enrobés comprenant les granulats légers décrits dans la demande EP 3 083 521, une isolation thermique en verre cellulaire qui se présente sous forme de plaques de format 60 cm x 45 cm ou 120 cm x 60 cm, et composée de bulles de verre rigides et hermétiquement closes commercialisé sous le nom FOAMGLAS^{®}, du polystyrène, ...

Avantageusement, la conductivité thermique, λ, de la couche de matériaux isolants est inférieure à 1 W/m.K.

Cette couche de matériaux isolant peut aussi remplir la fonction de couche support.

Le revêtement peut également comprendre une couche d'adhésion venant améliorer l'adhésion entre la couche isolante et la couche 6 comprenant les tuyaux 3. Elle répond aux spécifications de la norme NF P 98-150-1, de juin 2010.

Alternativement, la couche 6 creusée de l'étape a) peut être une couche isolante. Il s'agit alors d'une couche d'enrobés comprenant les granulats légers décrits dans la demande EP 3 083 521.

### EXEMPLES

L'enrobé 4 permet d'assurer un bon contact entre les tuyaux 3 et la composition durcie 4 tout en assurant que les tuyaux 3 ne remontent pas vers la surface.

Le bon contact entre les tuyaux 3 et la composition durcie 4 peut être vérifié par une méthode d'analyse de percolation par analyse d'image.

En particulier, on peut utiliser le protocole d'essai :
- coupe dans le sens transversal au tuyau 3
- Prise de vue avec un appareil photo de type Nikon 300, objectif 18-200
- Résolution : 12 Mpixels
- Photo englobant au minimum l'intégralité de la rainure et un cercle ayant pour centre le centre du cercle dessiné par le tuyau 3 et de diamètre D supérieur ou égal à 3d, d étant le diamètre de tuyau 3
- Photo en éclairage naturel
- Analyse visuelle des photos pour détecter les zones non percolées sur la surface analysée - Relevé manuel des surfaces
- Préconisation : le ratio surface non percolée détectée / surface analysée (3 d) doit être inférieur à 5%, de préférence 2%, de préférence 1%. L'expression « surface analysée (3 d) » signifie que la surface analysée correspond à un cercle ayant pour centre le centre du cercle dessiné par le tuyau 3 et de diamètre D supérieur ou égal à 3d, d étant le diamètre de tuyau 3.

Le fait que la composition permet d'assurer que les tuyaux 3 ne remontent pas vers la surface peut être vérifié par la méthode d'essai « Flottaison » suivante :
- Un tuyau 3 de diamètre d, exprimé en mm, est posé dans une réservation de forme rectangulaire ayant les dimensions suivantes :
   - Profondeur d + 1 cm
   - Largeur d + 1 cm
   - Longueur : 50 cm
- La composition est mise en œuvre suivant les conditions de mise en œuvre préconisée pour ladite composition, à la température qui sera sa température de mise en œuvre.
- L'échantillon est conservé 7 jours à 20°C + 3°C, pression atmosphérique, puis coupé dans le sens transversal au tuyau 3 et on mesure la distance séparant le fond de la réservation du tuyau 3. La composition est conforme si cette distance est inférieure à 1 cm strictement.

Dans les exemples qui suivent, pour toutes les épaisseurs, sauf indication contraire, il s'agit de l'épaisseur après compactage.

### Exemple 1 : Essais chantiers

Principe : réaliser un rainurage de la couche 6 de liaison via une fraiseuse spécifique puis pose des tuyaux 3 de l'échangeur avant mise en œuvre de la couche de roulement 5.

### Description des échantillons

### Tuyaux 3

Trois types de tuyaux 3 sont évalués sur la planche d'essai :
(1) Tuyau en polyéthylène réticulé avec barrière anti-oxygène fabriqué par REHAU en deux définitions: diamètre 20 mm × 1.9 mm et diamètre 20 × 2.9 mm (diamètre extérieur x épaisseur de peau), longueur 100 m Le coefficient de dilatation de ce tuyau 3 est de 140.10⁻⁶ m/mK à 20°C. Le retrait à chaud, mesuré suivant la norme NF EN ISO 2505 de septembre 2005, est inférieur à 3% (en étuve, à 150°C pendant 60 mn). La résistance à l'écrasement mesuré à 100°C est de 3000 N par mètre linéaire de tuyau.
(2) Tuyau en polypropylène fabriqué par MULTIBETON 17mm × 2.2 mm (diamètre extérieur x épaisseur de peau), longueur 100 m. Le coefficient de dilatation de ce tuyau 3 est de 160.10⁻⁶ m/mK à 23°C. Le retrait à chaud, mesuré suivant la norme NF EN ISO 2505 de septembre 2005, est inférieur à 2% (en étuve, à 150°C pendant 60 mn). La résistance à l'écrasement mesuré à 100°C est de 4500 N par mètre linéaire de tuyau.
(3) Tuyau en polybutène de diamètre 16 × 3 mm (diamètre extérieur x épaisseur de peau), longueur 20 m, coefficient de dilatation thermique : 130.10⁻⁶ m/m.K, conductibilité thermique : 0,24 W/m.K. La résistance à l'écrasement mesuré à 100°C est de 4500 N par mètre linéaire de tuyau commercialisé par Prolians (Bernard Pagès).

### Maintien des tuyaux 3

Les tuyaux 3 peuvent être fixés avec des clips en plastique :
(4) Clips Colliers Chevilles, RAMClip (RAM), (perçage de la chaussée en Ø 8 mm de part et d'autre de la rainure 1, puis installation des clips pour fixer les tuyaux 3).

### Enrobé hydrocarboné 4

On a testé un enrobé hydrocarboné 4 à chaud. La formule de l'enrobé hydrocarboné 4 à chaud (BBME 0/10) est donnée dans le tableau suivant :

**Tableau 1**

| | % en poids par rapport au poids total |
|---|---|
| 6/10 Thiviers | 55,3% |
| 0/2 Thiviers | 37,9% |
| Fines (en anglais : filler) | 1,6% |
| Liant d'apport 35/50 | 4,8 % |
| Sasobit^{®} | 0,4% |

Le SASOBlT^{®}, commercialisé par Sasol, est un additif permettant d'améliorer la maniabilité de la formule d'enrobés et de baisser la température de fabrication des enrobés. La température de fabrication est de 140°C.

### Protocole d'essai

La couche 6 de l'étape a) est une couche de liaison ayant la formule suivante :

**Tableau 2**

| Constituant | % en poids par rapport au poids total |
|---|---|
| 2/6 SGC | 50,5% |
| 0/2 SGC | 40,6% |
| Fines (en anglais : filler) | 3,5% |
| Liant d'apport 35/50 | 5,4% |

On réalise des rainures 1 et des bandes 2 dans cette couche 6 de liaison à l'aide d'une fraiseuse de chaussée :
- Dans un premier temps, on réalise des rainures 1 de dimensions proches de la taille des tuyaux 3 (diamètre extérieur des tuyaux : 17 à 22 mm).

Les rainures 1 ont été réalisés dans la couche 6 existante sur la planche d'essai avec un tambour équipé de 3 rangées de dents espacées de 26 cm permettant de réaliser des saignées de 3,5 cm de profondeur
- Dans un deuxième temps, on réalise des bandes 2 latérales de largeur 35 cm (largeur du plus petit tambour de fraiseuse) pour accueillir les boucles des tuyaux 3 de l'échangeur.

Deux zones tests ont été usinées avec cette fraiseuse spécifique :
• En zone 1, des rainures 1 longitudinales (dans le sens de circulation du finisseur) ont été fraisées en 6 passes (soit 18 rainures 1 de longueur d'environ 15m)
• En zone 2, un rainurage transversal a été réalisé (51 rainures 1 de longueur d'environ 4 m)

**Tableau 3 : Zone 1 - rainurage longitudinal**

| **Mode longitudinal** | |
|---|---|
| Surface traitée | 70 m² |
| Nombre de rainures 1 | 18 |
| Longueur des rainures 1 | 15 m |
| Durée de réalisation | 12 mn |

### Observations :

Le positionnement de la fraiseuse entre chaque passe a été réalisé via des repères sur l'engin afin d'assurer un écartement constant entre les rainures.

Une fois ce premier calage réalisé, aucune difficulté particulière n'a été notée.

**Tableau 4 : zone 2 - rainurage transversal**

| **Mode transversal** | |
|---|---|
| Surface traitée | 50 m² |
| Nombre de rainures 1 | 51 |
| Longueur des rainures 1 | 4,5 m |
| Durée de réalisation | 17 mn |

### Observations :

Le mode transversal est plus long à mettre en œuvre car il faut plus de passes de fraiseuse pour traiter la même surface (nombre de calage plus important).

On a prélevé des échantillons sous forme de plaques (épaisseur 5 cm environ, largeur 18 cm, longueur 50 cm) de cette couche 6 de liaison. Au laboratoire, on a installé le tuyau 3 dans une rainure 1, on a appliqué l'enrobé hydrocarboné 4 à chaud (BBME 0/10) à 140°C afin ensuite de réaliser des essais d'orniérage selon le protocole décrit dans le norme NF EN 12967-22 (septembre 2007).

Les résultats sont donnés dans le tableau suivant :

**Tableau 5**

| Descriptif du complexe | Résultat d'orniérage - 30 000 cycles |
|---|---|
| Echantillon de la zone 1 | 7% |
| Echantillon de la zone 2B | 5,9% |

Les complexes présentent une résistance à l'orniérage satisfaisante.

### Mise en œuvre des tuyaux 3 sur chantier

Les tuyaux 3 ont été mis en œuvre à chaud dans les rainures 1. Ce type de mise en œuvre permet d'améliorer la flexibilité des tuyaux 3:
- Pour les tuyaux en polypropylène, ce type de mise en œuvre est systématique pour thermoformer le tuyau et modifier sa mémoire de forme et limiter les tensions et torsions sur la matière. Le tuyau est chauffé à des températures supérieures à 70°C (en l'occurrence autour de 90°C).
- Pour les autres tuyaux en polyéthylène et en polybutène, la pose à chaud a également été mise en œuvre pour faciliter leur mise en place dans les rainures 1 ; les températures ont cependant été limitées à 40 - 50°C. La pose à chaud pour ce type de tuyau n'est pas obligatoire.

Les tuyaux 3 sont déposés dans les rainures 1, les demi-tours étant réalisés dans les bandes 2. On installe ainsi 50m de tuyau 3.

### Couche d'accrochage

On applique sur la couche 6 comprenant les tuyaux 3 une couche d'accrochage à 250 g de liant résiduel par m², par pulvérisation d'une émulsion cationique de bitume de formule suivante :

**Tableau 6**

| Constituant | Proportion kg / t d'émulsion |
|---|---|
| Bitume 70/100 Total | 650 kg/t |

| **Phase aqueuse** | |
|---|---|
| Dinoram^{®}S | 1,5 kg/t |
| HCI | 1,4 kg/t |
| Eau | Qsp pour 1t soit environ 350 kg/t |

| | |
|---|---|
| Qsp = quantité suffisante pour | |

### Comblement et mise en œuvre de la couche de roulement (étapes c) et d))

Les rainures 1 ont été comblées avec l'enrobé 4 décrit précédemment simultanément à l'application de l'enrobé 4 pour réaliser la couche de revêtement. L'enrobé 4 BBME 0/10 décrit précédemment permet de sceller les tuyaux 3 tout en fermant les rainures 1 et les bandes 2 et en assurant les propriétés d'une couche de roulement. L'enrobé 4 permet de combler simultanément les rainures 1 **et** les bandes latérales 2.

Deux mises en œuvre ont été testées :
- La couche d'enrobé 4 BBME0/10 est mise en œuvre en 1 passe de finisseur ; cette couche permet de remplir les rainures 1 et les bandes 2 et d'obtenir une couche de 5 cm d'épaisseur. Cette couche peut directement servir de couche de roulement 5.
- La couche d'enrobé 4 BBME0/10 de 5 cm est mise en œuvre en 2 passes de finisseur ; la première couche, de faible épaisseur de l'ordre de 1,5 cm - 3 cm permet de remplir les rainures 1 et les bandes 2 tandis que la seconde couche constitue à proprement parler la couche de roulement 5.

### Résultats :

### Zone 1 : Rainures 1 longitudinales / Mise en œuvre de la couche de roulement 5 en une passe de finisseur

La couche de roulement 5 est mise en œuvre en une passe.

### Observations :

Sur l'ensemble de la zone, visualisation des traces des rainures 1 en surface (quelques soit le tuyau).

### Zone 2A : Rainures 2 transversales / Mise en œuvre de la couche de roulement 5 en deux passes de finisseur

Après observation du phénomène de visualisation des traces des rainures 1, la couche de roulement 5 a été mise en œuvre en deux passes de finisseur avec compactage entre les deux passes.

### Observations :

Pas d'observation particulière : bonne tenue des tuyaux 3 (zone avec tuyaux en PP), pas de phénomène de visualisation par transparence.

### Zone 2B : Rainures 1 transversales / Mise en œuvre de la couche de roulement 5en une passe de finisseur

### Observations :

Sur la zone, visualisation des traces des rainures 1 en surface (tuyaux en PER ou PB).

Visuellement, moins marqué que pour les rainures 1 longitudinales.

On pourrait remplacer l'enrobé 4 BBME par un MBCF 4 ayant la formule donnée dans le tableau suivant :

**Tableau 7**

| | % en poids par rapport au poids total de la fraction granulaire |
|---|---|
| Passant 6,3 mm | 100% |
| Passant 2 mm | 57 % |
| Passant 0,063 mm | 7,6 % |

| | Partie pour Cent (ppc) en poids par rapport au poids total de la fraction granulaire |
|---|---|
| Ciment | 1 ppc |
| Eau de mouillage | 8,7 ppc |
| Emulsion à 60% (tensioactif : Stabiram^{®} MS 601) | 13,5 ppc |
| (liant résiduel) | (8,1 ppc) |

### Exemple comparatif 1 : essais en laboratoire

Dans cet exemple, différents matériaux de comblement ont été testés au laboratoire :
- Un enrobé 4 hydrocarboné à chaud (BBME 0/10) tel que défini dans le tableau 1
- Un mortier de jointement, commercial, Tradi-Pav Joint^{®} composé de ciments spéciaux, granulats 0/2 non-réactifs, fibres et adjuvants
- Deux mortiers de ciment ayant les formules données dans le tableau suivant

Le mortier Tradi-Pav Joint^{®} est préparé par mélange de 25kg de produit dans 3,5L, selon les préconisations du fabricant.

On a réalisé dans une plaque d'orniérage une réservation de forme rectangulaire ayant les dimensions suivantes :
- Profondeur d + 1 cm
- Largeur d + 1 cm
- Longueur : 50 cm

On a posé le tuyau 3 en polypropylène (ayant les caractéristiques données à l'exemple 1) dans cette réservation puis ajouté le mortier dans ses conditions de mise en œuvre recommandées.

La mise en place du mortier soulève le tuyau 3 qui flotte dans la réservation.

On a préparé des mortiers de ciment selon les formules suivantes, les quantités sont exprimées en kg pour 1m³ :

**Tableau 8**

| Formules | M1 | M2 |
|---|---|---|
| 0/2 luché | 1920 | - |
| 0/4 Dompierre | - | 1920 |
| Ciment CEM II 32,5 R | 400 | 400 |
| Superplastifiant¹ | 18,6 | 18,6 |
| Eau | 200 | 180 |
| Rapport eau/ciment | 0,5 | 0,45 |

| | | |
|---|---|---|
| ¹MasterGlenium ACE 500 commercialisé par BASF Le temps de malaxage a été de 4min. | | |

On a mis dans un récipient le tuyau 3 en polypropylène (ayant les caractéristiques données à l'exemple 1) et on a ajouté le mortier dans ses conditions de mise en œuvre usuelles. Avec le mortier M1, le tuyau 3 reste visible : il y a un manque de comblement autour du tuyau 3 et des vides à l'interfaces tuyau/mortier.

Avec le mortier M2, le tuyau 3 n'est pas visible mais on observe un ressuage important et le présence de vide au sein du mortier.

On a réalisé dans une plaque d'orniérage une réservation de forme rectangulaire ayant les dimensions suivantes :
- Profondeur d + 1 cm
- Largeur d + 1 cm
- Longueur : 50 cm

On a posé le tuyau 3 en polypropylène (ayant les caractéristiques données à l'exemple 1) dans cette réservation puis ajouté l'enrobé hydrocarboné 4 BBME 0/10 à une température de mise en œuvre de 140°C.

On n'observe pas de remontée ou de flottaison du tuyau 3.

Le tuyau 3 est parfaitement enrobé. Le bon contact entre les tuyaux 3 et l'enrobé 4 durci est vérifié par une méthode d'analyse de percolation par analyse d'image, selon le protocole d'essai suivant:
- coupe dans le sens transversal au tuyau 3
- Prise de vue avec un appareil photo de type Nikon 300, objectif 18-200
- Résolution : 12 Mpixels
- Photo englobant au minimum l'intégralité de la rainure et un cercle ayant pour centre le centre du cercle dessiné par le tuyau 3 et de diamètre D supérieur ou égal à 3d, d étant le diamètre de tuyau 3
- Photo en éclairage naturel
- Analyse visuelle des photos pour détecter les zones non percolées sur la surface analysée - Relevé manuel des surfaces

Le ratio surface non percolée détectée / surface analysée (3 d) est inférieur à 1%. L'expression « surface analysée (3 d) » signifie que la surface analysée correspond à un cercle ayant pour centre le centre du cercle dessiné par le tuyau 3 et de diamètre D supérieur ou égal à 3d, d étant le diamètre de tuyau 3.

## Revendications

1. Procédé de fabrication d'un revêtement de voiries (2) comprenant au moins un tuyau (3) d'un dispositif pour échangeur de chaleur, comprenant les étapes suivantes :
a) Creuser une couche (6) du revêtement de voiries pour créer des rainures (1) allant dans une même direction sans se croiser, et des bandes (2) reliant les rainures (1) deux à deux, les rainures (1) ayant une largeur allant de 0,8 d à 2,5 d et une profondeur allant de 0,8 d à 3 d, d étant le diamètre du au moins un tuyau (3) du dispositif pour échangeur de chaleur ; puis
b) Poser le au moins un tuyau (3) dans les rainures (1) et les bandes (2) créées à l'étape a) en formant des tronçons reliés par des coudes, les rainures (1) recevant les tronçons et les bandes (2) les coudes, le au moins un tuyau (3) ayant une résistance à l'écrasement supérieure à 2 000 N par mètre linéaire de tuyau à 100°C ; puis
c) Combler le volume laissé libre par le au moins un tuyau (3) dans les rainures (1) avec un enrobé hydrocarboné (4) à base :
- d'un liant hydrocarboné
- d'au moins 90% en poids, par rapport au poids total de l'enrobé hydrocarboné, d'une fraction granulaire dont les éléments ont des dimensions comprises entre 0 mm et 10 mm, ladite fraction granulaire comprenant de 30% à 60% en poids, par rapport au poids total de la fraction granulaire, d'éléments ayant des dimensions comprises entre 0 mm et 2 mm,
ledit enrobé (4) ayant une température de mise en œuvre inférieure à 160°C,
d) appliquer une couche de surface pour revêtement de voirie, en particulier une couche de roulement (5).

2. Procédé selon la revendication précédente, **caractérisé en ce que** le au moins un tuyau (3) répond à au moins une des spécifications suivantes :
- il a une résistance à l'écrasement supérieure à 3 000 N par mètre linéaire de tuyau à 100°C ;
- il a une dilatation thermique inférieure à 200.10⁻⁶ K⁻¹ à 20°C ;
- il est en polymère, avantageusement le polymère est choisi parmi le polyéthylène haute densité réticulé, le polypropylène, le polybutène, les copolymères bloc éthylène-propylène.

3. Procédé selon l'une quelconque des revendications précédentes, **caractérisé en ce que** la fraction granulaire comprend, en poids par rapport au poids total de la fraction granulaire :
- 6% à 9% de fines, ayant une taille inférieure à 0,063 mm ;
- 24% à 38% de sable, ayant une taille comprise entre 0,063 mm et 2 mm ;
- 40% à 65% de granulats, ayant une taille comprise entre 2 mm et 10 mm.

4. Procédé selon l'une quelconque des revendications précédentes, **caractérisé en ce que** l'enrobé hydrocarboné (4) est un matériau bitumineux coulé à froid.

5. Procédé selon l'une quelconque des revendications 1 à 3, **caractérisé en ce que** l'enrobé hydrocarboné (4) est un enrobé hydrocarboné dit à chaud ou tiède, avantageusement comprenant un additif de maniabilité.

6. Procédé selon l'une quelconque des revendications précédentes, **caractérisé en ce que** la couche (6) creusée lors de l'étape a) est une couche de surface, avantageusement une couche de liaison, cette couche est avantageusement une couche de matériaux liés.

7. Procédé selon l'une quelconque des revendications précédentes, **caractérisé en ce que** l'épaisseur de la couche de revêtement (6) destinée à être creusée lors de l'étape a) varie de d à 10 cm, avec d représentant le diamètre des tuyaux (3) et **en ce que** la largeur des bandes (2) est d'au moins 20 cm.

8. Procédé selon l'une quelconque des revendications précédentes, **caractérisé en ce que** les bandes (2) relient plus de deux rainures (1).

9. Procédé selon l'une quelconque des revendications précédentes, **caractérisé en ce que** l'écart entre deux rainures (1) est sensiblement constant.

10. Procédé selon l'une quelconque des revendications précédentes, **caractérisé en ce que** le dispositif pour échangeur de chaleur dans ladite couche de revêtement (6) ne comprend pas d'élément métallique.

11. Procédé selon l'une quelconque des revendications précédentes, **caractérisé en ce que** suite à l'étape b), avant l'étape c), on dépose une couche d'accrochage.

12. Procédé selon l'une quelconque des revendications précédentes, **caractérisé en ce que** les étapes c) et d) sont concomitantes.

13. Procédé selon l'une quelconque des revendications 1 à 11, **caractérisé en ce que** les étapes c) et d) sont successives.

14. Procédé selon l'une quelconque des revendications précédentes, **caractérisé en**
**ce que** le volume laissé libre par le au moins un tuyau (3) dans les bandes (2) est comblé avec le même enrobé hydrocarboné (4) de l'étape c).

15. Procédé selon l'une quelconque des revendications précédentes, **caractérisé en ce que** l'épaisseur combinée de la ou des couche(s) appliquée(s) lors des étapes c) et d) est inférieure à 30 cm, avantageusement inférieure à 10 cm.

## Patentansprüche

1. Verfahren zur Herstellung einer Straßenoberfläche (2), umfassend mindestens ein Rohr (3) einer Vorrichtung für einen Wärmetauscher, umfassend die folgenden Schritte:
a) Aushöhlen einer Schicht (6) der Straßenoberfläche, um Rillen (1) zu bilden, die in dieselbe Richtung gehen, ohne sich zu kreuzen, und Bänder (2), die die Rillen (1) paarweise verbinden, wobei die Rillen (1) eine Breite haben, die von 0,8 d bis 2,5 d reicht, und eine Tiefe, die von 0,8 d bis 3 d reicht, wobei d der Durchmesser des mindestens einen Rohrs (3) der Vorrichtung für Wärmetauscher ist; dann
b) Verlegen des mindestens einen Rohrs (3) in den Rillen (1) und den in Schritt a) geschaffenen Bändern (2) durch Bilden von Abschnitten, die durch Biegungen verbunden sind, wobei die Rillen (1) die Abschnitte und die Bänder (2) die Biegungen aufnehmen, wobei das mindestens eine Rohr (3) eine Bruchfestigkeit über 2.000 N je Langmeter Rohr bei 100 °C hat; dann
c) Auffüllen des durch das mindestens eine Rohr (3) in den Rillen (1) frei gelassenen Volumens mit einer bituminösen Masse (4) auf der Basis:
- eines bituminösen Bindemittels,
- von mindestens 90 Gew.-% im Verhältnis zum Gesamtgewicht der bituminösen Masse einer Granulatfraktion, deren Bestandteile Abmessungen haben, die zwischen 0 mm und 10 mm liegen, wobei die Granulatfraktion 30 Gew.-% bis 60 Gew.-% im Verhältnis zum Gesamtgewicht der Granulatfraktion Bestandteile umfasst, die Abmessungen haben, die zwischen 0 mm und 2 mm liegen,
wobei die bituminöse Masse (4) eine Verarbeitungstemperatur unter 160 °C hat,
d) Auftragen einer Straßenoberflächen-Oberflächenschicht, vor allem einer Deckschicht (5).

2. Verfahren nach vorangehendem Anspruch, **dadurch gekennzeichnet, dass** das mindestens eine Rohr (3) mindestens einer der folgenden Spezifikationen entspricht:
- es hat eine Bruchfestigkeit über 3.000 N je Langmeter Rohr bei 100 °C;
- es hat eine Wärmeausdehnung unter 200.10⁻⁶ K⁻¹ bei 20 °C;
- es ist aus Polymer, wobei das Polymer in vorteilhafter Weise aus dem vernetzten hochdichten Polyethylen, dem Polypropylen, dem Polybuten, den Ethylen-Propylen-Blockcopolymeren ausgewählt ist.

3. Verfahren nach einem der vorangehenden Ansprüche, **dadurch gekennzeichnet, dass** die Granulatfraktion in Gewicht im Verhältnis zum Gesamtgewicht der Granulatfraktion umfasst:
- 6 % bis 9 % Füller mit einer Größer unter 0,063 mm;
- 24 % bis 38 % Sand mit einer Größe zwischen 0,063 mm und 2 mm;
- 40 % bis 65 % Granulat mit einer Größe zwischen 2 mm und 10 mm.

4. Verfahren nach einem der vorangehenden Ansprüche, **dadurch gekennzeichnet, dass** die bituminöse Masse (4) ein kaltgegossenes Bitumenmaterial ist.

5. Verfahren nach einem der Ansprüche 1 bis 3, **dadurch gekennzeichnet, dass** die bituminöse Masse (4) eine warme oder lauwarme bituminöse Masse ist, die in vorteilhafter Weise einen Verarbeitbarkeitszuschlag umfasst.

6. Verfahren nach einem der vorangehenden Ansprüche, **dadurch gekennzeichnet, dass** die in Schritt a) ausgehöhlte Schicht (6) eine Oberflächenschicht, in vorteilhafter Weise eine Verbindungsschicht ist, wobei diese Schicht in vorteilhafter Weise eine Schicht aus verbundenen Materialien ist.

7. Verfahren nach einem der vorangehenden Ansprüche, **dadurch gekennzeichnet, dass** die Dicke der Überzugsschicht (6), die bestimmt ist, während des Schritts a) ausgehöhlt zu werden, von d bis 10 cm schwankt, wobei d den Durchmesser der Rohre (3) darstellt und dass die Breite der Bänder (2) mindestens 20 cm beträgt.

8. Verfahren nach einem der vorangehenden Ansprüche, **dadurch gekennzeichnet, dass** die Bänder (2) mehr als zwei Rillen (1) verbinden.

9. Verfahren nach einem der vorangehenden Ansprüche, **dadurch gekennzeichnet, dass** der Abstand zwischen zwei Rillen (1) etwa konstant ist.

10. Verfahren nach einem der vorangehenden Ansprüche, **dadurch gekennzeichnet, dass** die Vorrichtung für einen Wärmetauscher in der Überzugsschicht (6) kein metallisches Element umfasst.

11. Verfahren nach einem der vorangehenden Ansprüche, **dadurch gekennzeichnet, dass** nach dem Schritt b) vor dem Schritt c) eine Haftschicht aufgebracht wird.

12. Verfahren nach einem der vorangehenden Ansprüche, **dadurch gekennzeichnet, dass** die Schritte c) und d) gleichzeitig sind.

13. Verfahren nach einem der Ansprüche 1 bis 11, **dadurch gekennzeichnet, dass** die Schritte c) und d) aufeinanderfolgend sind.

14. Verfahren nach einem der vorangehenden Ansprüche, **dadurch gekennzeichnet, dass** das von dem mindestens einen Rohr (3) in den Bändern (2) freigelassene Volumen mit derselben bituminösen Masse (4) wie bei Schritt c) aufgefüllt wird.

15. Verfahren nach einem der vorangehenden Ansprüche, **dadurch gekennzeichnet, dass** die kombinierte Dicke der während der Schritte c) und d) aufgetragenen Schicht(en) kleiner als 30 cm, in vorteilhafter Weise kleiner als 10 cm ist.

## Claims

1. A method for manufacturing a road pavement (2) comprising at least one pipe (3) of a device for a heat exchanger, comprising the following steps of:
a) digging a course (6) of the road pavement to create grooves (1) extending in a same direction without crossing each other, and strips (2) connecting the grooves (1) two by two, the grooves (1) having a width ranging from 0.8d to 2.5d and a depth ranging from 0.8d to 3d, d being the diameter of the at least one pipe (3) of the device for a heat exchanger; and then
b) laying the at least one pipe (3) into the grooves (1) and the strips (2) created in step a) thereby forming sections connected by bends, the grooves (1) receiving the sections and the strips (2) receiving the bends, the at least one pipe (3) having a crushing strength higher than 2,000N per linear metre of pipe at 100°C; and then
c) filling the empty space left free by the at least one pipe (3) in the grooves (1) with an asphalt mix (4) based on:
- a hydrocarbon binder,
- at least 90% by weight, with respect to the total weight of the asphalt mix, of an aggregate fraction the elements of which have dimensions between 0 mm and 10 mm, said aggregate fraction comprising from 30% to 60% by weight, with respect to the total weight of the aggregate fraction, of elements having dimensions between 0 mm and 2 mm,
said asphalt mix (4) has a working temperature lower than 160°C,
d) applying a surface course for a road pavement, in particular a wearing course (5).

2. The method according to the preceding claim, **characterised in that** the at least one pipe (3) meets at least one of the following specifications:
- it has a crushing strength higher than 3,000N per linear metre of pipe at 100°C:
- it has a thermal expansion lower than 200•10-6 K-1 at 20°C;
- it is made of polymer, advantageously the polymer is chosen from crosslinked high-density polyethylene, polypropylene, polybutene and ethylenepropylene block copolymers.

3. The method according to any one of the preceding claims, **characterised in that** the aggregate fraction comprises, in weight with respect to the total weight of the aggregate fraction:
- from 6% to 9% of fines, having a size lower than 0.063 mm;
- from 24% to 38% of sand, having a size between 0.063 mm and 2 mm;
- from 40% to 65% of aggregates, having a size between 2 mm and 10 mm.

4. The method according to any one of the preceding claims, **characterised in that** the asphalt mix (4) is a cold cast bituminous material.

5. The method according to any one claims 1 to 3, **characterised in that** the asphalt mix (4) is a so-called hot or warm asphalt mix, advantageously comprising a workability additive.

6. The method according to any one of the preceding claims, **characterised in that** the course (6) dug in step a) is a surface course, advantageously a binding course, this course is advantageously a course of bound materials.

7. The method according to any one of the preceding claims, **characterised in that** the thickness of the course of the road pavement (6) intended to be in step a) ranges from d to 10 cm, with d representing the diameter of the pipes (3) and **in that** the width of the strips (2) is at least 20 cm.

8. The method according to any one of the preceding claims, **characterised in that** the strips (2) connect more than two grooves (1).

9. The method according to any one of the preceding claims, **characterised in that** the deviation between two grooves (1) is substantially constant.

10. The method according to any one of the preceding claims, **characterised in that** the device for a heat exchanger in said course of the road pavement (6) does not comprise a metal element.

11. The method according to any one of the preceding claims, **characterised in that**, after step b) and prior to step c), a tack coat is laid.

12. The method according to any one of the preceding claims, **characterised in that** steps c) and d) are concomitant.

13. The method according to any one of claims 1 o 11, **characterised in that** steps c) and d) are successive.

14. The method according to any one of the preceding claims, **characterised in that** the volume left free by the at least one pipe (3) in the strips (2) is filled with the same asphalt mix (4) of step c).

15. The method according to any one of the preceding claims, **characterised in that** the combined thickness of the course(s) applied during steps c) and d) is lower than 30 cm, advantageously lower than 10 cm.
